# EUROPÄISCHE PATENTSCHRIFT

(11) **EP 2 531 753 B1**
(45) Veröffentlichungstag und Bekanntmachung des Hinweises auf die Patenterteilung: **17.12.2014**
(21) Anmeldenummer: 11702959.5
(22) Anmeldetag: 31.01.2011
(51) Int. Cl.: F16K 11/074, F16K 31/04

(54) **MOTORISCHES DREHVENTIL**
MOTOR ACTUATED ROTARY VALVE
TIROIR ROTATIVE MOTORISÉ

(30) Priorität: 02.02.2010 DE 102010001498
(43) Veröffentlichungstag der Anmeldung: 12.12.2012
(73) Patentinhaber: Bruker BioSpin GmbH, 76287 Rheinstetten (DE)
(72) Erfinder: OGOL, Yuriy, 76137 Karlsruhe (DE); HANEBECK, Claus, 76287 Rheinstetten (DE); ROTH, Gerhard, 76287 Rheinstetten (DE)
(74) Vertreter: Kohler Schmid Möbus
(86) Internationale Anmeldenummer: PCT/EP2011/051313
(87) Internationale Veröffentlichungsnummer: WO 2011/095455

(56) Entgegenhaltungen:
- GB-A- 907 226
- US-A- 4 893 653
- US-A1- 2008 245 077

## Beschreibung

Die Erfindung betrifft ein Drehventil für einen Kryokühler, insbesondere für einen Pulsrohrkühler oder für einen Gifford-McMahon-Kühler, umfassend
- einen Drehkörper, welcher um eine Drehachse motorisch rotierbar ist,
- eine Steuerplatte,
- und ein axiales Wälzlager, mit dem der Drehkörper auf der Steuerplatte abrollen kann.

Ein solches Drehventil ist beispielsweise bekannt geworden durch die US 2008/0245077 A1, das die Merkmale des Oberbegriffs des Anspruchs 1 offenbart.

Für den Betrieb vieler technischer Anlagen, beispielsweise supraleitenden Magnetspulen, müssen kryogene Temperaturen bereitgestellt werden. Ein Prinzip zur Erzeugung von Kälte basiert auf der Expansion eines Arbeitsgases. Beim Pulsrohrkühler und beim Gifford-McMahon-Kühler wird abwechselnd ein hoher und niedriger Druck des Arbeitsgases auf einen Kaltkopf geschaltet. In der Praxis wird dazu ein Kompressor abwechselnd mit seiner Saugseite und seiner Hochdruckseite auf den Kaltkopf geschaltet. Dazu wird üblicherweise ein Drehventil eingesetzt.

Das Drehventil umfasst einen Drehkörper, weicher typischerweise mit einem Elektromotor angetrieben ist, und eine Steuerplatte. Durch die relative Drehung von Drehkörper und Steuerplatte werden abwechselnd verschiedene Strömungskanäle für das Arbeitsgas freigegeben und geschlossen, wodurch der Kaltkopf abwechselnd den gewünschten hohen und niedrigen Druck erfährt.

Beim Betrieb des Drehventils gleiten eine Oberfläche oder mehrere Oberflächen des Drehkörpers an einer Oberfläche oder mehreren Oberflächen der Steuerplatte ab; in den Kontaktbereichen dichten die Oberflächen das Arbeitsgas ab. Durch das Abgleiten kann es zu Materialabrieb kommen, der schließlich einen Austausch des Drehkörpers und/oder der Steuerplatte erzwingt.

Aus der US 2008/0245077 A1 ist es bekannt, den Drehkörper und die Steuerplatte jeweils mit einer umlaufenden Laufrinne zu versehen, wobei zwischen den Laufrinnen ein Kugel-Käfig gehalten ist. Durch dieses Kugellager kann der Verschleiß reduziert werden.

Nachteilig an diesem Stand der Technik ist der hohe Fertigungs- und Montageaufwand für dieses Kugellager. Die Laufrinnen müssen exakt konzentrisch zueinander angeordnet werden; anderenfalls laufen die Kugeln des Kugel-Käfigs aus wenigstens einer der Laufrinnen heraus, und die Oberflächen von Drehkörper und Steuerplatte verkippen gegeneinander. Dies führt zu Undichtigkeiten für das Arbeitsgas und erhöhtem Lagerverschleiß. In der Praxis müssen daher die meisten Bauteile des Drehventils, insbesondere der Drehkörper, aus Metall gefertigt und gefräßt werden, um die durch die Dichtigkeitsanforderungen vorgegebenen Fertigungstoleranzen einhalten zu können.

### Aufgabe der Erfindung

Aufgabe der vorliegenden Erfindung ist es, ein Drehventil für einen Kryokühler vorzustellen, welches einen geringen Verschleiß aufweist und dabei einfach zu fertigen und zu montieren ist.

### Kurze Beschreibung der Erfindung

Diese Aufgabe wird auf überraschend einfache, aber wirkungsvolle Art gelöst durch ein Drehventil der eingangs genannten Art, das dadurch gekennzeichnet ist, dass das axiale Wälzlager als ein in radialer Richtung nicht zentrierendes Lager ausgebildet ist.

Bei einem erfindungsgemäßen, nicht-zentrierenden Lager können der Drehkörper und die Steuerplatte (Steuerscheibe) in einem gewissen Bereich in radialer Richtung (also in der Ebene senkrecht zur Drehachse des Drehkörpers) - soweit es die Lagerung betrifft - frei aneinander abgleiten. Dann ist es aber unerheblich, ob der Drehkörper und die Steuerplatte im montierten Zustand aufgrund von Toleranzen oder Fehlern bei der Fertigung und/oder Montage geringfügig von einer exakt konzentrischen Ausrichtung bezüglich der Drehachse des Drehkörpers abweichen; die Dichtwirkung an den aneinander abgleitenden Oberflächen bleibt erhalten. Daher kann das Drehventil im Rahmen der Erfindung einfacher gefertigte Bauteile nutzen, etwa einen Drehkörper, der aus Kunststoff in der kostengünstigen Spritzgusstechnik gefertigt ist und vergleichsweise große Fertigungstoleranzen aufweist.

Zur Einrichtung eines nicht-zentrierenden Lagers sind typischerweise am Drehkörper und an der Steuerplatte ebene, einander gegenüberliegende, zueinander parallele Laufflächen ausgebildet, zwischen denen Rollkörper (wie Kugeln oder bevorzugt Kreiszylinder) angeordnet sind, etwa gehalten in einem Käfig. Aufgrund der ebenen Laufflächen erfolgt in radialer Richtung (senkrecht zur Drehachse des Drehkörpers) keine Zentrierung. Die Laufflächen sind typischerweise kreisringförmig ausgebildet, etwa an am Drehkörper und an der Steuerplatte befestigten Laufscheiben. Man beachte, dass die Laufflächen senkrecht zur Drehachse des Drehkörpers ausgerichtet sind.

In der Steuerplatte und im Drehkörper sind Ausnehmungen (Ausfräsungen, Öffnungen, Kanäie) vorgesehen. Durch eine während der Drehung des Drehkörpers veränderliche Überlappung der Ausnehmungen wird abwechselnd ein hoher und ein niedriger Druck eines Arbeitsgases (etwa Helium) auf den Kaltkopf (etwa ein Pulsrohr) geschaltet. Bei geeigneter Ausbildung der Ausnehmungen beeinflusst das Spiel in der radialen Ausrichtung von Drehkörper und Steuerplatte das Schaltverhalten des Drehventils nicht (siehe dazu unten).

Der Drehkörper wird typischerweise mittels eines Elektromotors angetrieben. Ein Wälzlager kann insbesondere ein Kugellager oder einer Zylinder-Rollenlager sein.

### Bevorzugte Ausführungsformen der Erfindung

Bei einer bevorzugten Ausführungsform des erfindungsgemäßen Drehventils ist das axiale Wälzlager als ein Zylinder-Rollenlager ausgebildet. Die (Kreis)Zylinder-Rollen sind für die Aufnahme hoher Kräfte geeignet, und die Laufflächen bleiben auch bei längerer Beanspruchung eben, so dass die nicht-zentrierende Eigenschaft des Lagers im Gebrauch auch bei weniger abriebfestem Material der Laufflächen erhalten bleibt. Zylinder-Rollen gestatten außerdem einen vergleichsweise flachen Aufbau. Im Rahmen dieser Ausführungsform sind üblicherweise die Zylinderachsen parallel zu den Laufflächen orientiert und auf die Drehachse des Drehkörpers gerichtet; mit anderen Worten die Zylinderachsen stehen (näherungsweise) senkrecht auf der Drehachse des Drehkörpers.

Bei einer bevorzugten Weiterbildung dieser Ausführungsform ist das Zylinder-Rollenlager als Nadellager ausgebildet. Das Nadellager weist einen besonders flachen Aufbau auf.

Besonders vorteilhaft ist eine Ausführungsform, die vorsieht, dass eine Ausnehmung für Arbeitsgas in der Steuerplatte sich in radialer Richtung vollständig innerhalb einer kommunizierenden Ausnehmung für Arbeitsgas im Drehkörper erstreckt oder umgekehrt. Im umgekehrten Fall gilt, dass eine Ausnehmung für Arbeitsgas im Drehkörper sich in radialer Richtung vollständig innerhalb einer kommunizierenden Ausnehmung für Arbeitsgas in der Steuerplatte erstreckt. Bei dieser Orientierung beeinflusst eine geringfügige radiale Fehlzentrierung, etwa aufgrund von Fertigungstoleranzen, das Strömungsverhalten des Arbeitsgases nicht. Die Kantenbeabstandung der Ausnehmungen in radialer Richtung ist typischerweise deutlich größer als das zu erwartende radiale Spiel; das Spiel liegt typischerweise im Bereich bis 0,2 mm oder weniger.

Bevorzugt ist auch eine Ausführungsform, bei der der Drehkörper mit einer Feder gegen die Steuerplatte gedrückt ist. Die Feder hält ein nichtselbsthaltendes Lager, auch wenn kein Arbeitsgasdruck geschaltet ist. Der Drehkörper sitzt hierbei typischerweise axial beweglich auf einer Welle eines Elektromotors auf.

Bei einer besonders bevorzugten Ausführungsform ist der Drehkörper aus Kunststoff gefertigt, insbesondere durch Spritzguss. Dadurch können die Herstellungskosten für das erfindungsgemäße Drehventil erheblich reduziert werden.

Bevorzugt ist schließlich auch noch eine Ausführungsform, bei der die Laufflächen des axialen Wälzlagers an der Steuerplatte und am Drehkörper separat sind von der Dichtfläche oder den Dichtflächen zwischen Steuerplatte und Drehkörper. Ein etwaiger Lagerabrieb beeinflusst dann das Dichtverhalten nicht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispieien näher erläutert. Es zeigen:
- Fig. 1: einen schematischen Überblick über ein Kühlsystem mit einem Pulsrohrkühler, umfassend ein erfindungsgemäßes Drehventil dargestellt im Axialschnitt;
- Fig. 2: einen Axialschnitt durch ein erfindungsgemäßes Drehventil einschließlich Motor mit einem Kugellager;
- Fig. 3: einen Axialschnitt durch ein erfindungsgemäßes Drehventil einschließlich Motor mit einem Zylinderrollenlager;
- Fig. 4: einen Axialschnitt durch ein erfindungsgemäßes Drehventil einschließlich Motor mit einem Nadellager;
- Fig. 5: einen Radialschnitt durch das Drehventil von Fig. 3 auf Höhe der Linie V in Fig. 3.

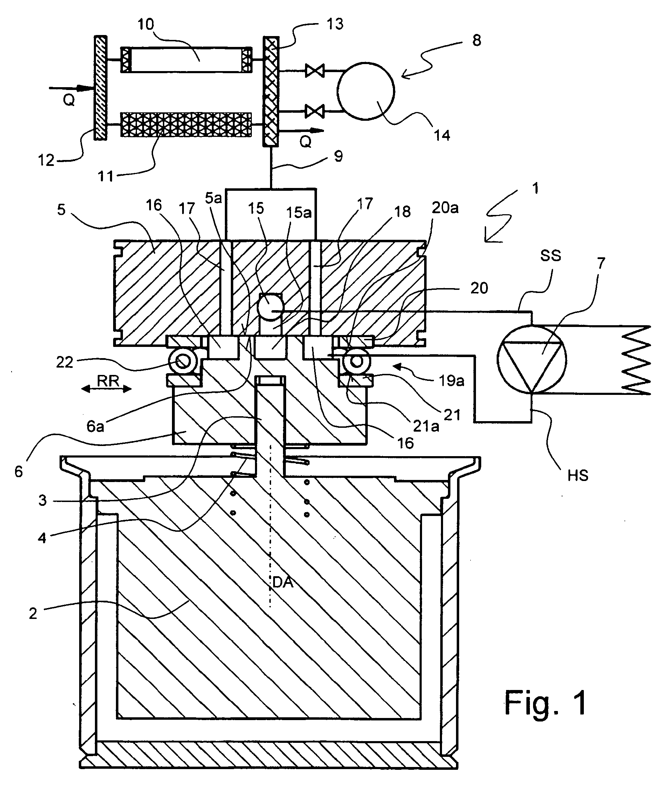

Fig. 1 zeigt einen Überblick über ein Kühlsystem, weiches im Rahmen der vorliegenden Erfindung eingesetzt werden kann.

Das Kühlsystem umfasst ein erfindungsgemäßes Drehventil 1, mit einem Drehkörper 6 und einer Steuerplatte (Steuerscheibe) 5. Der Drehkörper 6 kann mittels eines Elektromotors 2 relativ zur Steuerplatte 5 rotiert werden. Dabei dreht sich der Drehkörper 6 um eine Drehachse DA . Der Drehkörper 6 ist verdrehsicher auf einer Welle 3 des Elektromotors 2 gehalten, kann aber in axialer Richtung (parallel zur Drehachse DA des Drehkörpers) auf der Welle 3 frei gleiten. Mit einer Feder 4 wird der Drehkörper 6 auch bei fehlendem Arbeitsgasdruck gegen die Steuerplatte 5 gedrückt.

Mittels eines Kompressors 7 wird abwechselnd eine Hochdruckseite HS und eine Saugseite SS auf einen Kaltkopf 8 bzw. dessen Arbeitsgaseingang 9 geschaltet. Der Kaltkopf 8 ist hier als ein Pulsrohrkühler ausgebildet, mit einem Pulsrohr 10, einem Regeneratorrohr 11, einem kalten Wärmetauschbereich 12 (vgl. Wärmefluss Q), einem warmen, von der Außenluft gekühlten Wärmetauschbereich 13, und einem Puffervolumen 14.

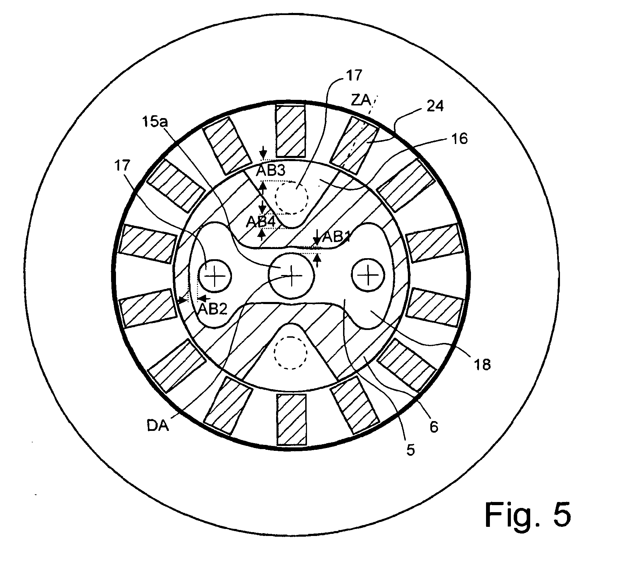

Im Drehkörper 6 und in der Steuerplatte 5 sind diverse Ausnehmungen (Ausfräsungen, Öffnungen, Kanäle) vorgesehen, um den Fluss bzw. den Druck des Arbeitsgases (hier Helium) zu kontrollieren. Die Saugseite SS (auch genannt Niederdruckseite) ist über einen Kanal 15 mit einer zentralen Bohrung 15a der Steuerplatte 5 verbunden. Die Hochdruckseite HS ist mit der Umgebung des Drehkörpers 6 verbunden, so dass der Druck des Arbeitsgases zum einen den Drehkörper 6 (zusätzlich zur Feder 4) gegen die Steuerplatte 5 drückt, aber auch Arbeitsgas mit hohem Druck in seitlich offene Ausnehmungen 16 des Drehkörpers 6 eindringen und über zwei azentrische Kanäle 17 zum Eingang 9 des Kaltkopfes 8 gelangen kann (Man beachte, dass zur Vereinfachung ein Druckgehäuse für das Drehventil 1, weiches insbesondere den Raum seitlich des Drehkörpers 6 abdichtet, in der Fig. 1 nicht dargestellt ist). Durch Drehen des Drehkörpers um 90° um die Achse DA kann auch die Saugseite SS mittels einer zentralen Ausnehmung 18 im Drehkörper auf die Kanäle 17 geschaltet werden (siehe Fig. 5).

Der Drehkörper 6 stützt sich in zwei Bereichen an der Steuerplatte 5 ab. Zum einen liegen die das Arbeitsgas abdichtenden Oberflächen 5a der Steuerplatte 5 und 6a des Drehkörpers 6 aneinander an; sie verlaufen jeweils senkrecht zur Drehachse DA. Zum anderen ist ein nicht-zentrierendes Lager 19a eingerichtet. An der Steuerplatte 5 und am Drehkörper 6 ist jeweils eine ringförmige Laufscheibe 20, 21 aus einem abriebfesten Material, etwa einem gehärteten Metall oder einer Keramik wie SiC, befestigt. Die Laufscheiben sind mit zueinander parallelen, ebenen Flächen 20a, 21a einander zugewandt. Zwischen diesen Flächen 20a, 21a ist ein Käfig mit Kugeln 22 eingerichtet. Da die Flächen 20a, 21a (anders ais bei herkömmlichen Kugellagern im Stand der Technik) keine Laufrinne ausbilden, sondern eben und parallel zur radialen Richtung RR verlaufen, hat der Drehkörper 6 ein gewisses radiales Spiel, ohne die Dichtwirkung an den Flächen 5a, 6a zu beeinträchtigen; insbesondere kommt es zu keiner Verkippung zwischen Drehkörper 6 und Steuerplatte 5, wenn der Drehkörper 6 und die Steuerplatte 5 geringfügig in radialer Richtung RR gegeneinander verschoben sind. Weiterhin werden hier auch die Überlappungen der Ausnehmungen/Kanäle 15a, 16, 17, 18 nicht beeinträchtigt (siehe dazu auch Fig. 5).

Das nicht-zentrierende Lager erlaubt somit größere Toleranzen bei der relativen radialen Ausrichtung von Drehkörper und Steuerplatte. Insbesondere sind einfachere und kostengünstigere Fertigungs- und Befestigungsverfahren für den Drehkörper möglich. Vorliegend wurde der Drehkörper 6 aus einem Kunststoff (etwa Polyethen) im Spritzgussverfahren hergestellt.

Nach der Montage des Drehventils 1 liegt typischerweise zunächst der Drehkörper 6 nur mit der Dichtfläche 6a (und nicht über das Lager 19a) an der Steuerplatte 5 an. Durch Abrieb wird der Überstand jedoch unter der Wirkung der Feder 4 und ggf. des Arbeitsgasdrucks schnell verkürzt, bis auch das Lager 19a den Drehkörper 6 hält, was insbesondere bei Verwendung von Kunststoffmaterial an der Dichtfläche 6a rasch erfolgt. Sodann ist der Drehkörper 6 perfekt eingepasst, und das Lager 19a verhindert weiteren Abrieb an der Dichtfläche 6a.

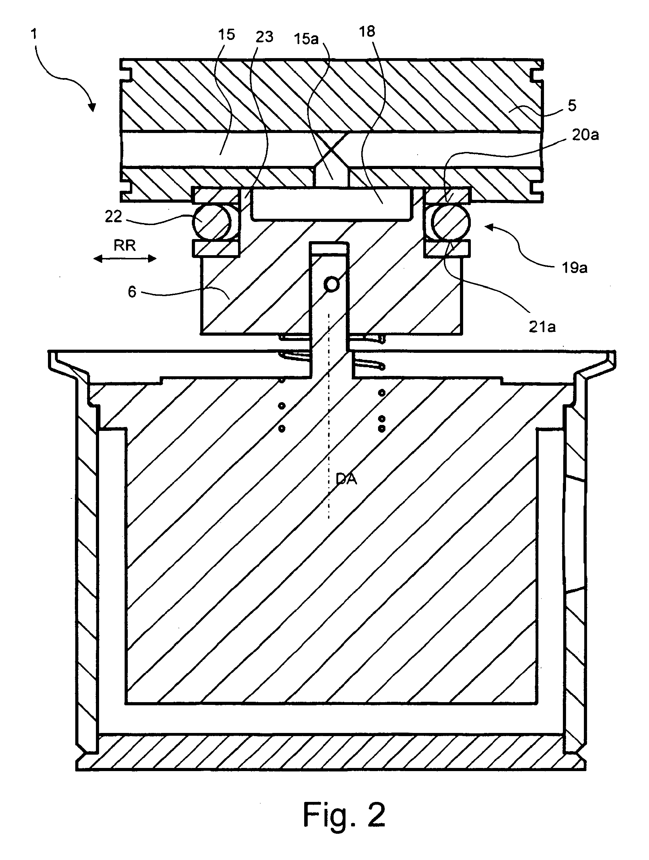

In den Figuren 2, 3 und 4 sind jeweils verschiedene mögiiche Ausbildungen des Lagers des Drehventils 1 näher erläutert. Es werden im Folgenden nur die Unterschiede zur Fig. 1 erläutert.

Die Fig. 2 zeigt das Drehventil von Fig. 1 mit nicht-zentrierendem Kugellager 19a, jedoch in einer um 90° um die Drehachse DA des Drehkörpers 6 rotierter, vertikaler Schnittebene. Der Kanal 15 und die Ausnehmung 18 sind nunmehr in ihrer jeweiligen Längsrichtung geschnitten zu sehen. Die Saugseite SS (die mit Kanal 15 verbunden ist) ist nicht auf den Eingang des Kaltkopfs geschaltet, wie auch in Fig. 1 dargestellt. Ein Steg 23 dichtet den Außenbereich des Drehkörpers 6 (wo stets Hochdruck des Arbeitsgases anliegt), wo sich auch die Kugeln 22 befinden, gegen die Ausnehmung 18 ab. Man beachte, dass sich die Kugeln 22 auf entlang der radialen Richtung RR ebenen Laufflächen 20a, 21a bewegen.

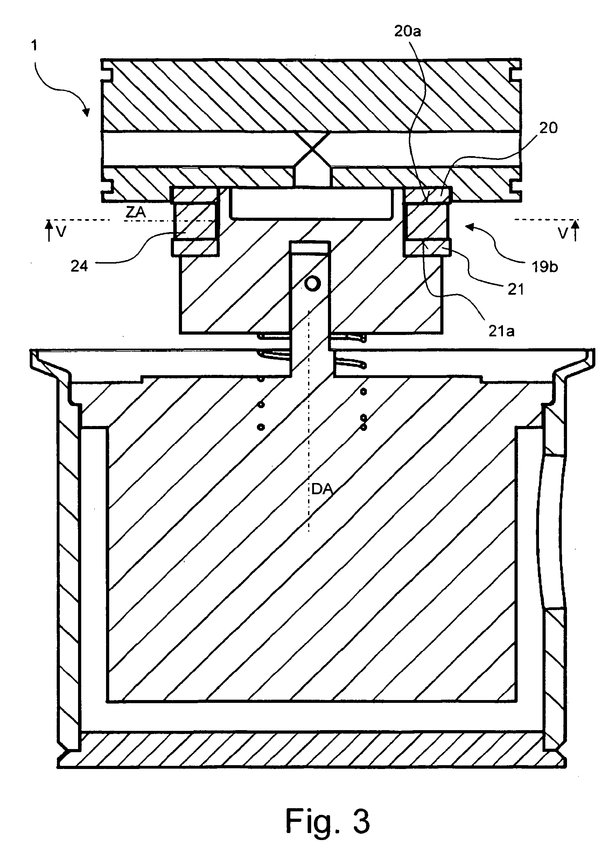

In der Fig. 3 ist das nicht-zentrierende Lager 19b mit Zylinderrollen 24 ausgebildet, die auf den ebenen, parallelen, sich gegenüber liegenden Flächen 20a, 21 a der Laufscheiben 20, 21 abrollen, Die Zylinderachsen ZA sind auf die Drehachse DA des Drehkörpers 6 gerichtet und verlaufen senkrecht zur Drehachse DA. Die Laufflächen 20a, 21 a werden bei Benutzung eben abgerieben, so dass auch bei einem weniger abriebfesten Material der Laufscheiben 20,21 keine Neigung zur Ausbildung einer Laufrinne besteht.

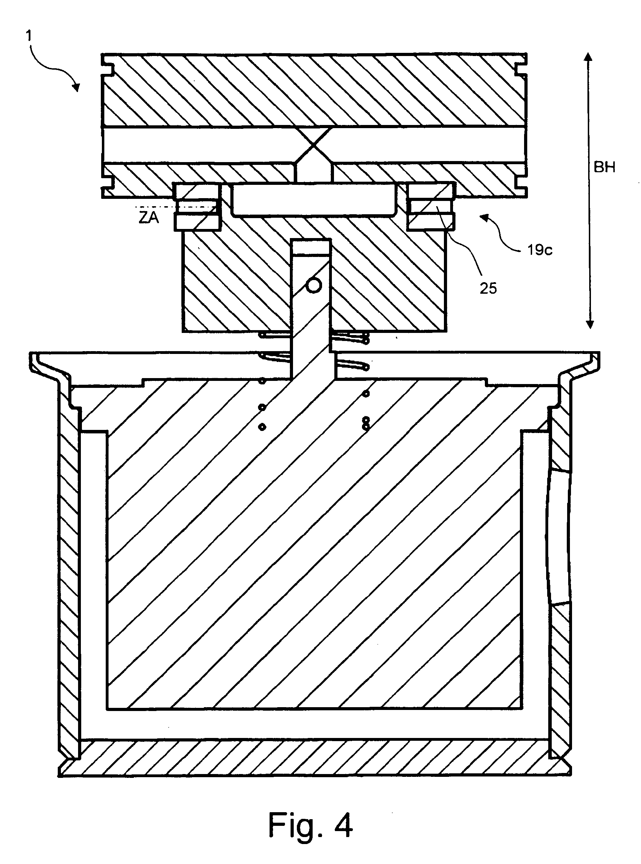

Die **Fig.** 4 zeigt das nicht-zentrierende Lager 19c ausgebildet mit Zylinderrollen 25 besonders geringen Durchmessers; in diesem Falle wird das Lager 19c auch "Nadellager" genannt. Durch Verwendung eines Nadellagers 19c kann die Bauhöhe BH des Drehventils 1 in axialer Richtung reduziert werden.

Die **Fig. 5** zeigt schließlich einen Querschnitt durch das Lager 19b von Fig. 3 bei dortiger Linie V, jedoch in um 90° verdrehter Stellung des Drehkörpers 6 (durchgezogenen Linien) und zusätzlich angedeutet in der Stellung von Fig. 3 (gepunktete Linien).

Im Querschnitt können die (Kreis-)Zylinderrollen 24 erkannt werden, mit denen der Drehkörper 6 und die Steuerplatte 5 im Lager 19b aufeinander abrollen.

In der mit den durchgezogenen Linien gezeigten Stellung verbindet gerade die zentrale Ausnehmung 18 des Drehkörpers 6 die an der Unterseite der Steuerplatte 5 mündenden Kanäle 17 mit der zentralen Bohrung 15a, welche mit der Saugseite des Kompressors verbunden ist.

In der durch die gepunkteten Linien angedeuteten relativen Orientierung von Drehkörper 6 und Steuerplatte 5 werden die Kanäle 17 über die seitlich offenen Ausnehmungen 16 des Drehkörpers 6 mit der Hochdruckseite des Kompressors verbunden (siehe auch Fig. 1).

Die Mündungen der Kanäle 17 liegen bezüglich ihrer radialen Ausdehnung vollständig innerhalb der zentralen Ausnehmung 18, und auch vollständig innerhalb der seitlich offenen Ausnehmungen 16. Ebenso liegt die zentrale Ausnehmung 15a in ihrer radialen Ausdehnung vollständig innerhalb der zentralen Ausnehmung 18. in der Fig. 5 ist eine exakt konzentrische Ausrichtung von Drehkörper 6 und Steuerplatte 5 gezeigt, bei der sich bezüglich aller kommunizierender Ausnehmungen (Ausfräsungen, Öffnungen, Kanäle) eine erhebliche Kantenbeabstandung AB1, AB2, AB3, AB4 in radialer Richtung ergibt. Die kleinste Kantenbeabstandung in der konzentrischen Ausrichtung, hier AB1 bei den zentralen Ausnehmungen 15a und 18, ist erfindungsgemäß so groß, dass die maximal zu erwartende Fertigungs- und Montagetoleranz bezüglich einer radialen Fehlpassung von Drehkörper 6 und Steuerplatte 5 kleiner als die besagte kleinste Kantenbeabstandung AB1 ist. Dann wird durch die radiale Fehlpassung der Fluss bzw. die Druckverteilung des Arbeitsgases nicht beeinträchtigt.

## Patentansprüche

1. Drehventil (1) für einen Kryokühler, insbesondere für einen Pulsrohrkühler oder für einen Gifford-McMahon-Kühler, umfassend
- einen Drehkörper (6), welcher um eine Drehachse (DA) motorisch rotierbar ist,
- eine Steuerplatte (5),
- und ein axiales Wälzlager, mit dem der Drehkörper (6) auf der Steuerplatte (5) abrollen kann,
**dadurch gekennzeichnet,**
**dass** das axiale Wälzlager als ein in radialer Richtung (RR) nicht zentrierendes Lager (19a-19c) ausgebildet ist.

2. Drehventil (1) nach Anspruch 1, **dadurch gekennzeichnet, dass** das axiale Wälzlager als ein Zylinder-Rollenlager (19b, 19c) ausgebildet ist.

3. Drehventil (1) nach Anspruch 2, **dadurch gekennzeichnet, dass** das Zylinder-Rollenlager (19b, 19c) als Nadellager (19c) ausgebildet ist.

4. Drehventil (1) nach einem der vorhergehenden Ansprüche, **dadurch gekennzeichnet, dass** eine Ausnehmung (15a, 17) für Arbeitsgas in der Steuerplatte (5) sich in radialer Richtung (RR) vollständig innerhalb einer kommunizierenden Ausnehmung (16,18) für Arbeitsgas im Drehkörper (6) erstreckt oder umgekehrt.

5. Drehventil (1) nach einem der vorhergehenden Ansprüche, **dadurch gekennzeichnet, dass** der Drehkörper (6) mit einer Feder (4) gegen die Steuerplatte (5) gedrückt ist.

6. Drehventil (1) nach einem der vorhergehenden Ansprüche, **dadurch gekennzeichnet, dass** der Drehkörper (6) aus Kunststoff gefertigt ist. insbesondere durch Spritzguss.

7. Drehventil (1) nach einem der vorhergehenden Ansprüche, **dadurch gekennzeichnet, dass** die Laufflächen (20a, 21a) des axialen Wälzlagers an der Steuerplatte (5) und am Drehkörper (6) separat sind von der Dichtfiäche oder den Dichtflächen (5a, 6a) zwischen Steuerplatte (5) und Drehkörper (6).

## Claims

1. Rotary valve (1) for a cryocooler, in particular, for a pulse tube cooler or for a Gifford-McMahon cooler, comprising
- a rotary body (6) which can be rotated about an axis of rotation (DA) by means of a motor,
- a control plate (5),
- and an axial rolling bearing by means of which the rotary body (6) can roll along the control plate (5),
**characterized in that**
the axial rolling bearing is designed as a bearing (19a, 19c) which is non-centering in the radial direction (RR).

2. Rotary valve (1) according to claim 1, **characterized in that** the axial rolling bearing is designed as a cylindrical roller bearing (19b, 19c).

3. Rotary valve (1) according to claim 2, **characterized in that** the cylindrical roller bearing (19b, 19c) is designed as a needle bearing (19c).

4. Rotary valve (1) according to any one of the preceding claims, **characterized in that** a recess (15a, 17) for working gas extends in the control plate (5) in a radial direction (RR) entirely within a communicating recess (16, 18) for working gas in the rotary body (6) or vice versa.

5. Rotary valve (1) according to any one of the preceding claims, **characterized in that** the rotary body (6) is pressed against the control plate (5) by a spring (4).

6. Rotary valve (1) according to any one of the preceding claims, **characterized in that** the rotary body (6) is produced from plastic material, in particular, through injection molding.

7. Rotary valve (1) according to any one of the preceding claims, **characterized in that** the bearing surfaces (20a, 21a) of the axial rolling bearing at the control plate (5) and at the rotary body (6) are separate from the sealing surface or sealing surfaces (5a, 6a) between the control plate (5) and the rotary body (6).

## Revendications

1. Vanne tournante (1) destinée à un refroidisseur cryogénique, en particulier à un refroidisseur à tube à gaz pulsé ou à un refroidisseur de Gifford-McMahon, comprenant
- un corps rotatif (6) pouvant accomplir des rotations motorisées autour d'un axe de rotation (DA),
- une plaque de commande (5),
- et un palier axial de roulement, par lequel ledit corps rotatif (6) peut rouler sur ladite plaque de commande (5),
**caractérisée par le fait**
**que** le palier axial de roulement est réalisé sous la forme d'un palier (19a-19c) n'exerçant aucun centrage dans le sens radial (RR).

2. Vanne tournante (1) selon la revendication 1, **caractérisée par le fait que** le palier axial de roulement est réalisé sous la forme d'un palier (19b, 19c) à rouleaux cylindriques.

3. Vanne tournante (1) selon la revendication 2, **caractérisée par le fait que** le palier (19b, 19c) à rouleaux cylindriques est réalisé sous la forme d'un palier (19c) à aiguilles.

4. Vanne tournante (1) selon l'une des revendications précédentes, **caractérisée par le fait qu'**un évidement (15a, 17) dédié à du gaz de travail dans la plaque de commande (5) est situé, dans le sens radial (RR), intégralement à l'intérieur d'un évidement communicant (16, 18) dédié à du gaz de travail dans le corps rotatif (6), ou inversement.

5. Vanne tournante (1) selon l'une des revendications précédentes, **caractérisée par le fait que** le corps rotatif (6) est poussé contre la plaque de commande (5) par un ressort (4).

6. Vanne tournante (1) selon l'une des revendications précédentes, **caractérisée par le fait que** le corps rotatif (6) est fabriqué en matière plastique, notamment par moulage par injection.

7. Vanne tournante (1) selon l'une des revendications précédentes, **caractérisée par le fait que** les surfaces de roulement (20a, 21a) du palier axial de roulement, sur la plaque de commande (5) et sur le corps rotatif (6), sont distinctes de la surface d'étanchement ou des surfaces d'étanchement (5a, 6a) entre ladite plaque de commande (5) et ledit corps rotatif (6).
